Europäisches Patentamt

European Patent Office

Office européen des brevets

(19)

(11) Numéro de publication : **0 388 244 B1**

# FASCICULE DE BREVET EUROPEEN

(12)

(45) Date de publication du fascicule du brevet :
**27.12.91 Bulletin 91/52**

(51) Int. Cl.⁵ : **F01L 1/34, F16D 3/10**

(21) Numéro de dépôt : **90400040.3**

(22) Date de dépôt : **05.01.90**

(54) Accouplement pour la transmission de couples alternés.

(30) Priorité : **13.01.89 FR 8900366**

(43) Date de publication de la demande :
**19.09.90 Bulletin 90/38**

(45) Mention de la délivrance du brevet :
**27.12.91 Bulletin 91/52**

(84) Etats contractants désignés :
**AT BE CH DE DK ES FR GB GR IT LI LU NL SE**

(56) Documents cités :
**DE-A- 3 210 914
FR-A- 1 085 087
FR-A- 2 187 051
PATENT ABSTRACTS OF JAPAN vol. 8, no.
230 (M-333)(1667) 23 octobre 1984, & JP-A-59
110816 (FUJI JUKOGYO K.K.) 26 juin 1984,**

(73) Titulaire : **Melchior, Jean Frédéric
126 Boulevard Montparnasse
F-75014 Paris (FR)**

(72) Inventeur : **Melchior, Jean Frédéric
126 Boulevard Montparnasse
F-75014 Paris (FR)**

(74) Mandataire : **Lemoine, Michel et al
CABINET LEMOINE ET BERNASCONI 13,
Boulevard des Batignolles
F-75008 Paris (FR)**

## Description

L'invention est relative à un accouplement, à phase variable en fonctionnement, pour la transmission d'un couple alterné entre une partie menante, destinée à être reliée à un arbre menant, et une partie menée, destinée à être reliée à un arbre qui est normalement mené, lesquelles parties, en fonctionnement, sont soumises à des couples alternés résistants et moteurs, l'une des parties menante et menée de l'accouplement étant reliée à un cylindre et l'autre à un piston qui délimitent entre eux au moins deux chambres antagonistes, de telle manière qu' à une valeur angulaire du déphasage entre les deux arbres corresponde une position relative et une seule entre piston et cylindre ; et les deux chambres ayant un volume total sensiblement constant et étant remplies d'un liquide hydraulique pratiquement incompressible aux pressions normales de fonctionnement.

L'invention concerne plus particulièrement, mais non exclusivement, les accouplements destinés à être disposés entre l'arbre principal d'un moteur à combustion interne, à soupapes et/ou à injecteurs actionnés par au moins un arbre à cames, et cet arbre à cames, en vue de faire varier en marche le calage angulaire de l'arbre à cames par rapport à l'arbre principal du moteur. Dans l'un de ces cas en effet, l'arbre à cames est soumis cycliquement, en aval de l'accouplement, à des couples résistants, lorsque les profils ascendants des cames ouvrent les soupapes contre l'action des organes de rappel élastiques usuels de celles-ci, puis à des couples moteurs, lorsque ces organes de rappel ferment les soupapes en leur faisant suivre les profils descendants des cames. Il en est de même dans le cas où l'arbre à cames actionne des injecteurs.

Les accouplements connus, du type défini en préambule, font appel à un organe de puissance extérieur tel qu'une source de fluide sous pression (voir US-A-2.958.315 et FR-A-2.187.051 et 1.085.087).

L'invention a pour but d'agencer les accouplements du type en question de façon telle que l'on puisse faire varier en fonctionnement la phase entre arbre menant et arbre normalement mené sans faire appel à un organe de puissance tel qu'une source de fluide sous pression. Elle a également pour but de rendre ces accouplements plus simples, plus compacts, moins coûteux et plus fiables. Elle a encore pour but d'agencer ces accouplements de façon qu'ils autorisent un grand débattement angulaire entre arbre menant et arbre mené sans provoquer de vibrations angulaires. Elle a pour but enfin d'autoriser une variation rapide de phase entre arbre menant et arbre mené.

A cet effet, l'accouplement du type défini ci-dessus est caractérisé en ce que les deux chambres sont reliées entre elles par deux circuits de communication unidirectionnelle, de sens opposés et chacun de volume sensiblement constant ; et en ce qu'il comprend des moyens distributeurs agencés de manière soit à activer l'un ou l'autre de ces circuits de communication, en neutralisant l'autre, soit à les neutraliser tous les deux, selon que le déphasage entre les parties menante et menée de l'accouplement doit être soit augmenté ou diminué, soit maintenu constant.

De cette façon, on peut mettre à profit les différences de pressions du liquide hydraulique, alternativement positives et négatives, entre deux chambres antagonistes de l'ensemble piston-cylindre pour augmenter le volume soit de l'une, soit de l'autre de ces chambres et pour diminuer corrélativement le volume de la chambre opposée, grâce à l'action conjointe des circuits de communication unidirectionnelle et des moyens de distribution, et faire ainsi varier le déphasage dans le sens voulu, par échange de liquide hydraulique entre les deux chambres.

L'invention est également relative aux moteurs à combustion interne équipés d'un accouplement tel que défini ci-dessus, entre leur arbre principal et leur ou leurs arbres à cames.

L'invention va être décrite plus en détail ci-après à l'aide des dessins annexés.

Les figures 1 et 2 illustrent la répartition des forces et couples dans les mécanismes à arbres à cames.

La figure 3 illustre un accouplement établi selon un premier mode de réalisation de l'invention, à cylindre et piston animés de mouvements relatifs de rotation.

Les figures 4 et 5 représentent le distributeur de la figure 3, en deux autres positions de fonctionnement.

La figure 6 montre, par une courbe, comment varie la pression en fonction du temps, dans les chambres du cylindre rotatif de la figure 3.

La figure 7 illustre un accouplement établi selon un deuxième mode de réalisation de l'invention, à cylindre et piston animés de mouvements relatifs de translation.

La figure 8 est une courbe permettant une comparaison avec celle de la figure 6.

La figure 9 représente un perfectionnement du mode de réalisation de la figure 3.

La figure 10 illustre l'application de l'accouplement de la figure 3 à la commande de l'arbre à cames d'un moteur qui est suralimenté par un groupe turbocompresseur et dont la figure 11 montre un diagramme de fonctionnement.

Les figures 12 et 13 représentent, respectivement par une vue en coupe transversale et par une vue en coupe axiale, un accouplement dont les moyens distributeurs et les circuits de communication sont incorporés aux parties tournantes de l'accouplement.

Les figures 14 à 16 illustrent l'application de l'accouplement des figures 12 et 13 à la régulation d'un moteur à combustion interne à turbocompresseur de suralimentation.

Les figures 17 et 18 enfin illustrent une autre variante des modes de réalisation précédents.

L'invention a pour objet un accouplement, à phase variable en fonctionnement, qui comprend une partie menante, destinée à être reliée, directement ou indirectement, à un arbre menant, et une partie menée, destinée à être reliée, directement ou indirectement, à un arbre qui est normalement mené, lesquels arbres, en fonctionnement, sont soumis à des couples alternés résistants et moteurs.

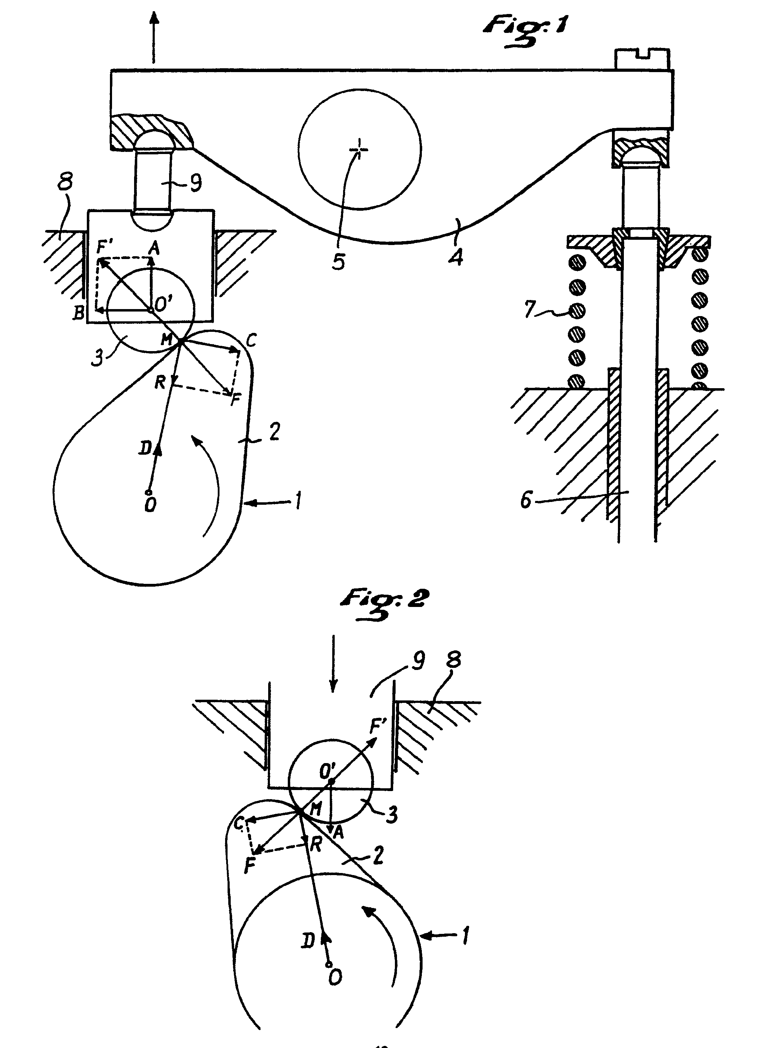

Avant de décrire l'invention, il paraît utile de rappeler comment se répartissent les forces et couples dans un arbre à cames 1 tel que celui qui est illustré aux figures 1 et 2.

Le nez de la ou de chaque came 2 de cet arbre 1 attaque un galet 3 en un point M. Par l'intermédiaire d'un culbuteur 4, qui oscille autour d'un axe 5, le galet 3 tend à pousser la tige 6 d'une soupape contre l'action d'un ressort de rappel 7.

A la figure 1, le galet 3, en se levant, s'oppose au mouvement de la came 2 par la force $\overrightarrow{MF}$ normale aux deux surfaces en contact. Cette force se décompose en :

$\overrightarrow{MR}$ : effort transversal appliqué à l'arbre à cames 1, d'axe de rotation O ;

$\overrightarrow{MC}$ : couple résistant appliqué à la came 2.

L'effort $\overrightarrow{MR}$ est équilibré par la réaction $\overrightarrow{OD}$ des paliers de l'arbre 1.

La force $\overrightarrow{MF}$ est équilibrée par la réaction $\overrightarrow{O'F'}$ du galet 3, cette réaction se décomposant en $\overrightarrow{O'B}$, réaction latérale du galet 3 sur le bâti (ou la culasse) 8 dans lequel il coulisse et en $\overrightarrow{O'A}$, force verticale soulevant la tige 9 du culbuteur 4 et comprimant le ressort 7.

Lorsque, du fait de la rotation de l'arbre 1, le nez de la came 2 échappe au galet 3 (figure 2), le ressort 7 se détend et la force axiale $\overrightarrow{O'A}$ s'inverse. Cette force axiale applique à la cames 2 l'effort $\overrightarrow{MF}$ qui se décompose en

$$\overrightarrow{MF} = \overrightarrow{MR} + \overrightarrow{MC}.$$

Etant donné que la force $\overrightarrow{MC}$ s'est inversée par rapport au sens de rotation de l'arbre 1, le couple appliqué à la came 2, qui était résistant dans le cas de la figure 1, s'inverse et devient moteur dans le cas de la figure 2. Ainsi le couple appliqué à l'arbre à cames 1 est alterné.

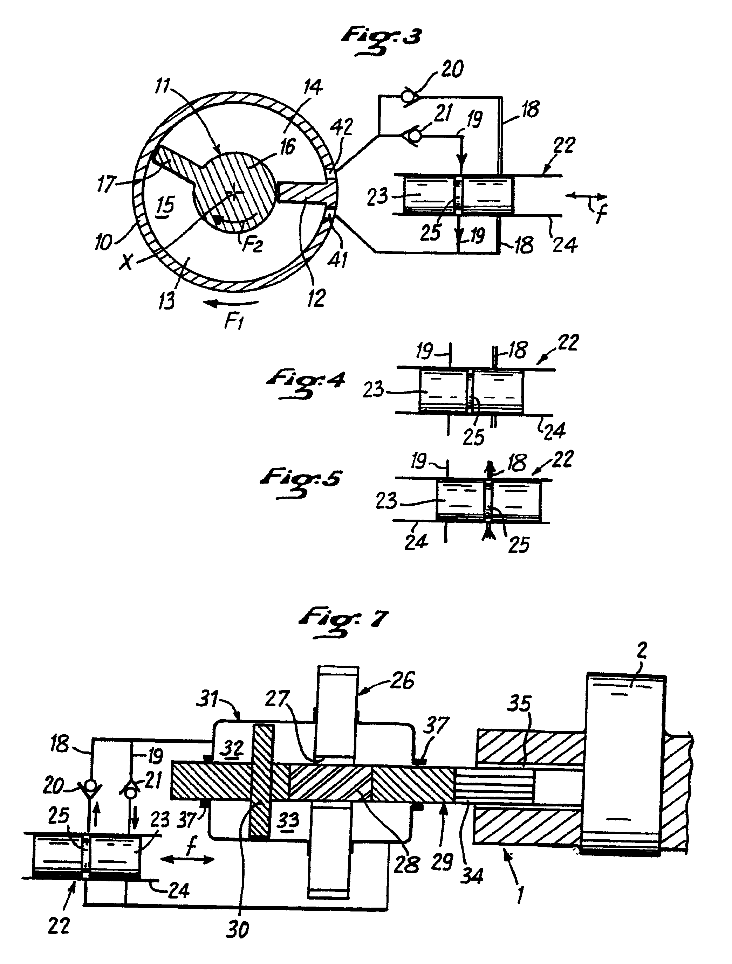

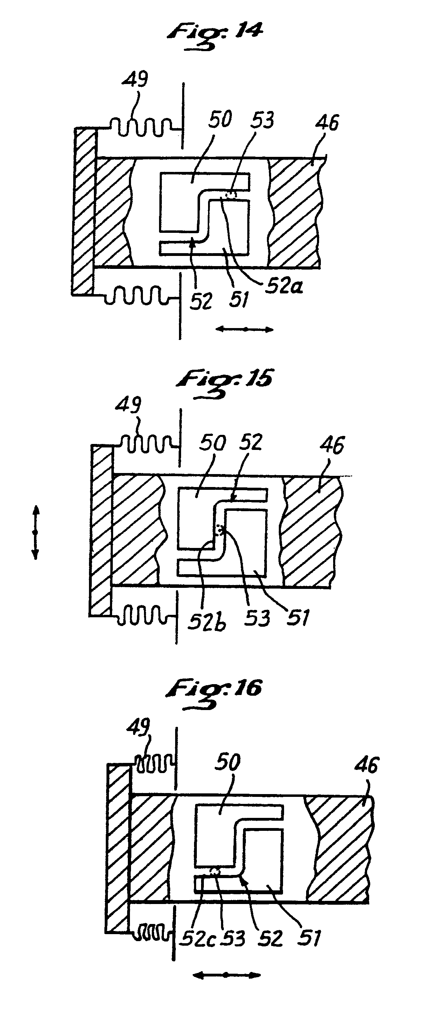

Selon le mode de réalisation de l'accouplement qui est représenté schématiquement à la figure 3, l'une des parties menante et menée de l'accouplement est reliée à, ou constituée par, un cylindre 10 et l'autre de ces parties est reliée à, ou constituée par, un piston 11 qui délimite dans le cylindre 10, avec une cloison radiale 12 fixe par rapport au cylindre 10, deux chambre antagonistes 13 et 14. Selon le mode de réalisation de la figure 3 où le cylindre 10 et le piston 11 sont animés de mouvements relatifs de rotation, le cylindre 10 est constitué par une enveloppe cylindrique limitée axialement par deux parois transversales telles que 15 (voir aussi la figure 13) et le piston 11 est constitué par un arbre 16 qui traverse de façon étanche les susdites parois transversales 15 et qui porte une palette radiale 17, laquelle délimite les deux chambres 13 et 14 en les isolant l'une de l'autre. A l'exception des éléments 12 et 17, le cylindre 10 et le piston 11 ont tous deux une forme de révolution autour d'un axe X autour duquel ils sont agencés de façon à pouvoir tourner respectivement dans le sens des flèches $F_1$ et $F_2$. Les deux chambres 13 et 14 ont un volume total sensiblement constant, sont remplies d'un liquide pratiquement incompressible aux pressions normales de fonctionnement et sont reliées entre elles par deux circuits de communication unidirectionnelle 18 et 19, de sens opposés grâce à la présence de clapets anti-retour 20 et 21. Chacun des circuits 18 et 19 a un volume sensiblement constant. On a désigné par 41 et 42 les orifices respectifs par lesquels les chambres 13 et 14 sont reliées aux circuits 18 et 19. L'accouplement comprend enfin des moyens distributeurs 22 agencés de manière à activer ou à neutraliser l'un ou l'autre des circuits 18 et 19 et à ne pas créer de pertes de charge substantielles dans la communication, lorsqu'elle existe, entre les deux chambres 13 et 14.

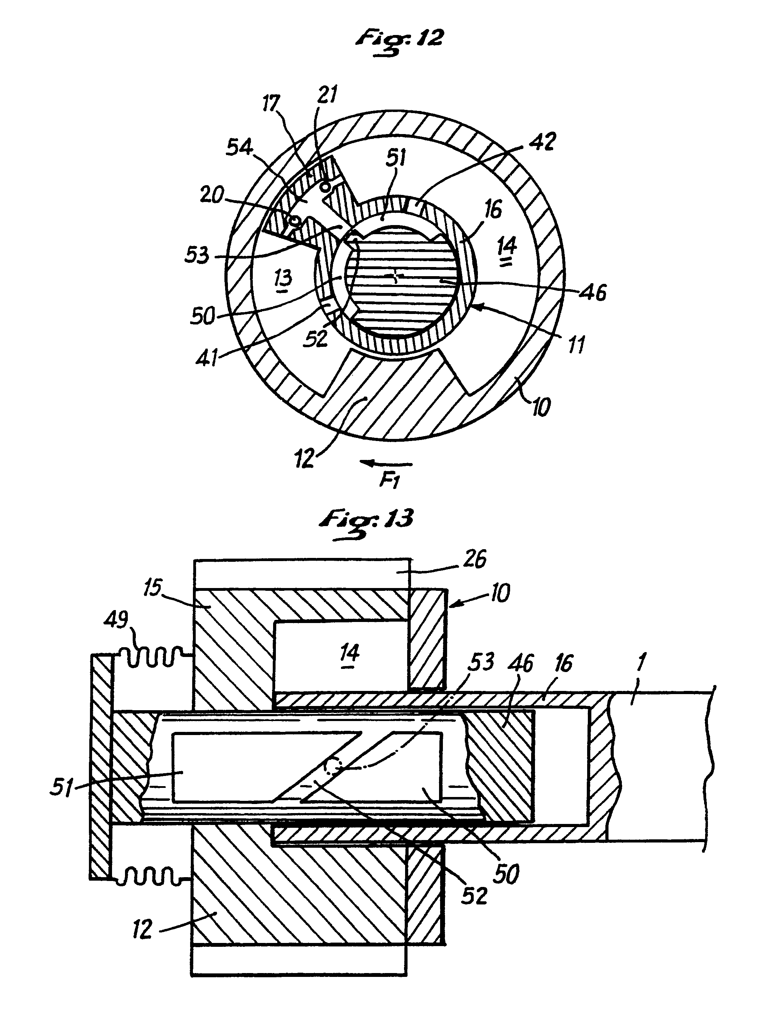

Selon le mode de réalisation illustré à titre d'exemple à la figure 3, les moyens distributeurs 22 sont constitués par un distributeur à tiroir 23, mobile à l'intérieur d'un corps 24 comme schématisé par la double flèche f. Ce tiroir 23 comprend une gorge ou passage ouvert 25 (voire deux gorges, comme montré à la figure 10), capable d'assurer la continuité alternativement des circuits 18 et 19, et des portées pleines destinées à interrompre ces même circuits. Enfin, des garnitures d'étanchéité (non montrées) sont avantageusement disposées d'une part sur la cloison 12, de façon à coopérer avec la surface cylindrique de l'arbre 16, et d'autre part sur la palette 17, de façon à coopérer avec la surface cylindrique intérieure du cylindre 10.

Le fonctionnement de l'accouplement représenté schématiquement à la figure 3 est le suivant.

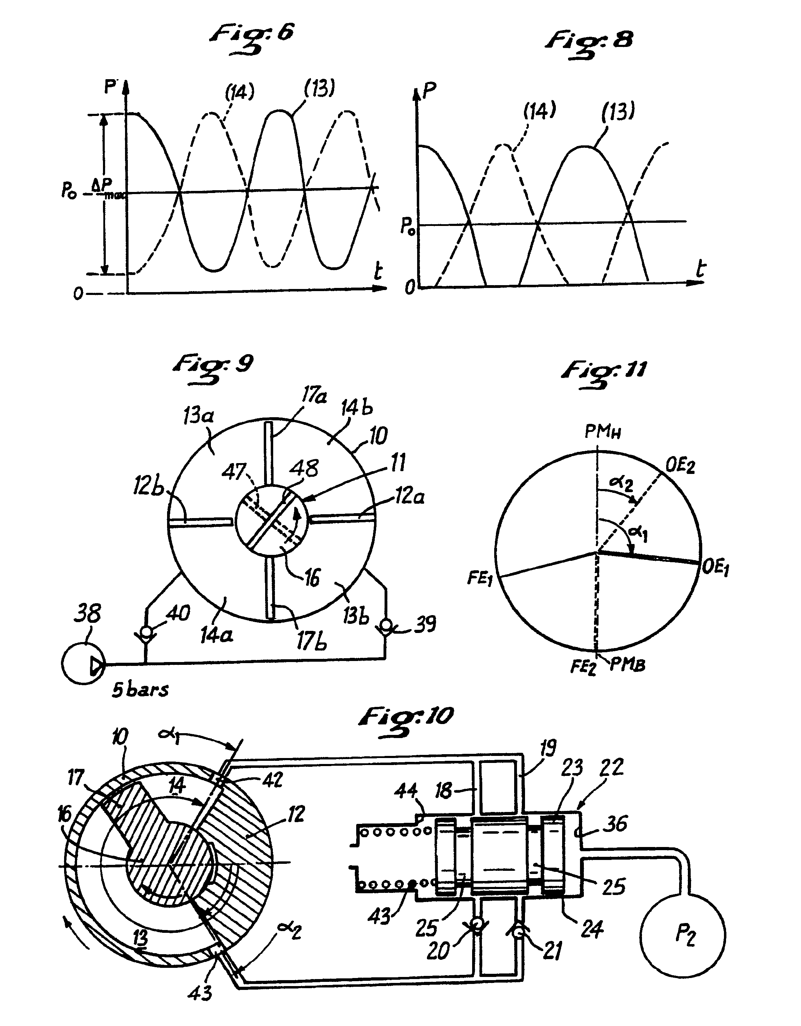

Dans la position qui est représentée à la figure 4, le tiroir 23 présente des parties pleines devant les circuits 18 et 19 respectivement. Les deux chambres 13 et 14 sont donc isolées l'une de l'autre. Le couple est transmis par la compression hydrostatique du liquide remplissant les deux chambres, le cylindre 10 et le piston 11 tournant en bloc autour de l'axe X. Les deux arbres reliés respectivement au cylindre 10 et au piston 11 tournent en synchronisme avec une différence de phase $\varphi_0$. La pression dans chacune des deux chambres 13 et 14 varie avec la même fréquence que celle du couple auquel est soumis l'arbre normalement mené, tel que l'arbre 1 de la figure 1, et en opposition de phase dans une chambre par rapport à l'autre, comme le montre la figure 6, où sont portés, en abscisse, le temps t et, en ordonnée, la pression P dans les chambres 13 (en trait plein) et 14 (en trait interrompu). Cette pression peut atteindre plusieurs centaines de bars.

Dans la position qui est représentée à la figure 5, le tiroir 23 présente la gorge 25 devant le circuit 18 et une partie pleine devant le circuit 19. Ceci établit une communication de la chambre 13 vers la chambre 14, à travers le clapet anti-retour 20, et empêche toute communication de la chambre 14 vers la chambre 13. Lorsque la pression dans la chambre 13 dépasse la pression dans la chambre 14, du liquide s'écoule de la chambre 13 vers la chambre 14, ce qui diminue le déphasage entre les deux arbres. Lorsque la pression dans la chambre 14 dépasse celle dans la chambre 13, aucun échange de liquide ne se produit entre les deux chambres 13 et 14 et le déphasage reste inchangé. Le déphasage voulu entre les deux arbres s'établit donc en fonction de la durée d'ouverture du circuit 18, ainsi qu'il sera expliqué plus en détail ci-après.

Dans la position qui est représentée à la figure 3, le tiroir 23 présente la gorge 25 devant le circuit 19 et une partie pleine devant le circuit 18. Pour les raisons inverses de celles qui ont été exposées en référence à la figure 5, le déphasage augmente chaque fois que la pression dans la chambre 14 dépasse la pression dans la chambre 13.

De toute façon, le déphasage entre la partie menante et la partie menée est au plus égal au débattement angulaire maximal de la palette 17 dans le cylindre 10, entre les deux faces de la cloison radiale 12, et il est réglé par la durée d'ouverture du circuit 18 ou 19, compte tenu de la vitesse de transvasement de l'une des chambres 13, 14 à l'autre à travers le circuit 18 ou 19. Le dimensionnement de ces circuits permet de régler la vitesse de passage d'un état à l'autre, ce qui permet d'obtenir de grandes vitesses de variation du déphasage. On voit en outre qu'après chaque déphasage, la phase est bloquée hydrauliquement et que, aux fuites près entre les chambres 13 et 14, toute oscillation mécanique est interdite, malgré les variations de pression du liquide hydrostatique dans lesdites chambres. On voit enfin que ces effets sont obtenus sans intervention d'un organe de puissance extérieur.

Dans ce qui précède, on a supposé, pour simplifier l'exposé, que l'accouplement de la figure 3 ne possédait que deux chambre opposées 13 et 14. En réalité, il est préférable que l'accouplement possède aux moins deux paires de chambres opposées deux à deux. En général, il suffit, comme le montre la figure 9, de remplacer la chambre 13 par deux chambres opposées 13a et 13b reliées constamment entre elles par un canal 47 et la chambre 14 par deux chambres 14a et 14b reliées constamment entre elles par un canal 48, ces chambres 13a, 14a, 13b, 14b étant alternées sur la circonférence du cylindre 10. Il suffit pour cela de remplacer la cloison 12 par deux cloisons diamétralement opposées 12a et 12b et la palette 17 par deux palettes diamétralement opposées 17a et 17b et de ménager les canaux 47 et 48 dans l'arbre 16 du piston 11. Cette solution présente certes l'inconvénient de diminuer de moitié le débattement angulaire du piston 11 par rapport au cylindre 10 mais l'important avantage d'équilibrer les forces exercées en fonctionnement sur ces éléments 10 et 11.

Selon le mode de réalisation de la figure 7 où le cylindre et le piston sont animés de mouvements relatifs de translation, l'accouplement comprend un pignon 26 relié à un arbre menant (non représenté) et possédant une denture intérieure oblique 27 qui engrène avec une denture extérieure oblique 28 portée par la tige 29 d'un piston 30, de telle façon qu'un déplacement en translation du piston 30 se traduise par une rotation relative de sa tige 29 par rapport au pignon 26. Le piston 30 est mobile en translation dans un cylindre 31 qui est fixe par rapport au pignon menant et avec lequel il délimite deux chambres antagonistes 32 et 33, analogues aux chambres 13 et 14 du mode de réalisation de la figure 3. Comme dans ce dernier mode de réalisation, les deux chambres 32 et 33 sont remplies d'un liquide pratiquement incompressible aux pressions normales de fonctionnement et sont reliées entre elles par deux circuits de communication unidirectionnelle 18 et 19, à clapets anti-retour 20 et 21. De plus, l'accouplement comprend des moyens distributeurs 22 agencés comme ceux de la figure 3. Enfin, la tige 29 comprend des cannelures droites 34 qui coopèrent avec des rainures droites 35 ménagées à l'intérieur de l'arbre mené, tel que l'arbre à cames 1 de la figure 1. Par ailleurs, il est prévu des garnitures d'étanchéité 37, entre le cylindre 31 et la tige coulissante et rotative 29, en plus des garnitures d'étanchéité usuelles (non montrées) entre le cylindre 31 et le piston 30. Pour des raisons d'équilibrage et pour assurer la constance de la somme des volumes des deux chambres 32 et 33, la tige 29 traverse le cylindre 31 de part et d'autre du piston 30, par des portées cylindriques de sections égales.

Le fonctionnement du mode de réalisation de la figure 7 est analogue à celui de la figure 3. En effet, selon la position du tiroir 23 des moyens distributeurs 22, le piston 30 est soit maintenu immobile en translation dans le cylindre 31, auquel cas la phase est maintenue constante entre l'arbre menant accouplé au pignon 26 et l'arbre mené 1, soit déplacé en translation dans un sens ou dans l'autre à l'intérieur du cylindre 31, auquel cas il se produit un déphasage angulaire dans un sens ou dans l'autre entre l'arbre menant et l'arbre mené 1, grâce à la coopération des dentures obliques 27 et 28.

Malgré l'intérêt de la variante de la figure 7, le mode de réalisation à vérin rotatif de la figure 3 est préférable pour des raisons de simplicité et de compacité. C'est donc sur ce mode de réalisation que vont être exposées les variations de la pression dans les chambres antagonistes 13 et 14 (ces variations étant d'ailleurs semblables mais réduites de moitié dans le cas où ces chambres sont dédoublées et alternées sur la circonférence du cylindre 10, comme indiqué ci-dessus).

On supposera tout d'abord que le fluide remplissant les chambres 13 et 14 est incompressible, que la somme des volumes de ces deux chambres est constante et qu'il n'y a ni fuite entre les deux chambres, ni frottement.

Si on appelle $P_0$ la pression moyenne dans les chambres 13 et 14 et $\Delta P_{max}$ la variation maximale de la pression dans ces chambres, deux cas peuvent se produire :

$P_0 > \dfrac{\Delta P_{max}}{2}$ (figure 6) : les pressions dans les chambres sont toujours positives, ou

$P_0 < \dfrac{\Delta P_{max}}{2}$ (figure 8) : la pression s'annulera périodiquement dans les chambres 13 et 14, en créant cavitation et poches de vapeur.

Si, contrairement à l'hypothèse exposée ci-dessus, on tient compte du frottement des arbres et pignons, il s'ajoute à la pression une composante continue, correspondant au couple résistant de frottement.

En pratique, la variation maximale de pression $\Delta P_{max}$ est très élevée (de l'ordre de 200 à 300 bars). Pour éviter la formation de dépressions périodiques et de cavitation, selon un perfectionnement de l'invention illustré à la figure 9, on fait communiquer les chambres 13 (ou 13a, 13b) et 14 (ou 14a, 14b), à travers des moyens uni-directionnels ou clapets anti-retour 39 et 40, avec une pompe 38 à basse pression, par exemple 5 bars, qui peut donc être la pompe à huile d'un moteur à combustion interne équipé de l'accouplement en question. Il est à noter que cette pompe est un organe d'appoint (ou une réserve de liquide hydraulique) et non un organe de puissance et est destinée à compenser d'éventuelles fuites de liquide hydraulique vers l'extérieur et/ou à compenser les petites variations de volume, résultant de la compression du liquide hydraulique qui n'est pas tout à fait nulle ou de la déformation des chambres et de leurs circuits de communication 18 et 19.

Comme le liquide est légèrement compressible et les chambres 13 et 14 légèrement déformables, le système se comporte ainsi comme une pompe hydraulique. En effet, à supposer que la pression de gavage (pompe 38) est de 5 bars et la variation maximale de pression due au couple alterné est de 200 bars, lors d'une première période :

— la pression monte à 100 bars dans la chambre 13 et le volume de celle-ci diminue de la quantité correspondant à la compression du liquide ;
— la pression tombe à 5 bars et moins dans la chambre 14, le clapet anti-retour 40 s'ouvre et la chambre 14 aspire une quantité de liquide égale à la variation de volume de cette chambre.

Lors de la période suivante, les phénomènes s'inversent et c'est le clapet anti-retour 39 qui laisse passer du liquide vers la chambre 13.

Progressivement, les deux chambres 13 et 14 se remplissent et la pression moyenne $P_0$ atteindra alors d'elle-même une valeur au moins égale à la moitié de la variation maximale de la pression à laquelle s'ajoute la pression de gavage, c'est-à-dire, dans l'exemple cité, $P_0 = 200/2 + 5 = 105$ bars.

Dans ce qui précédé, on a exposé le fonctionnement pas à pas de l'accouplement conforme à l'invention selon lequel, en actionnant le tiroir distributeur 23 dans un sens ou dans l'autre à partir de sa position neutre ou de blocage hydrostatique (figure 4), par impulsions de durées $\Delta t$, on fait varier la phase, entre arbre menant et arbre mené, par incréments algébriques $\Delta \varphi$ (fonctionnement en "boucle ouverte" ou sans contre-réaction).

Mais il paraît plus avantageux encore d'adopter un fonctionnement en "boucle fermée" ou avec contre-réaction. Dans le mode de réalisation préféré de l'accouplement conforme à l'invention, certains paramètres de fonctionnement du moteur qui est muni de cet accouplement dépendent de la position relative de l'arbre principal du moteur et de l'arbre à cames commandant l'ouverture et la fermeture des soupapes. Par exemple, dans un moteur à combustion interne suralimenté par au moins un groupe turbocompresseur et tel que décrit dans le brevet français n°8516430 du 6 novembre 1985 (publication n°2.589.518), l'angle d'ouverture de la (ou chaque) soupape d'échappement, à la fin de la course de détente du piston, détermine la température des gaz qui pénètrent dans la turbine de suralimentation du moteur : anticiper l'ouverture de l'échappement, pour une charge donnée du moteur, augmente la température et la pression des gaz pénétrant dans cette turbine et, par voie de conséquence, la pression de l'air de suralimentation $P_2$.

Selon un développement de l'invention illustré à la figure 10, on asservit la position du tiroir distributeur 23 à au moins un paramètre de fonctionnement du moteur et plus particulièrement à la pression d'air de suralimentation $P_2$, par exemple en faisant agir cette pression sur l'une des faces transversales de ce tiroir 23 et un ressort de rappel 43 sur son autre face transversale. Il est ainsi possible de réguler la pression d'air de suralimentation pour l'empêcher, par exemple, de tomber au-dessous d'un certain seuil. Ce seuil peut être, par exemple, le seuil minimal permettant le fonctionnement stable d'un moteur à combustion interne à allumage par compression.

La figure 11 montre, sur un diagramme angulaire où sont indiqués de manière usuelle le point mort haut (PMH) et le point mort bas (PMB) du piston d'un cylindre appartenant à un moteur qui est équipé de l'accouplement de la figure 10, l'angle d'ouverture $\alpha_1$ de la soupape d'échappement de ce moteur en fonctionnement normal et l'angle d'ouverture $\alpha_2$ de la même soupape lors du fonctionnement à basse pression.

L'ouverture de l'échappement est désignée par OE et la fermeture de l'échappement par FE et ces symboles sont affectés du même indice que les angles d'ouverture.

En fonctionnement à puissance élevée, la pression de suralimentation, qui est élevée, agit sur le tiroir distributeur 23 (figure 10) qui comprime le ressort 43 et vient en appui sur une butée mécanique 44. Dans cette position, le tiroir établit une communication de la chambre 14 vers la chambre 13, par l'intermédiaire du clapet anti-retour 21. Ainsi, du fait de la transmission du couple alterné (figure 6), à chaque fois que la pression dans la chambre 14 dépasse celle qui règne dans la chambre 13, du liquide s'écoule de la chambre 14 vers la chambre 13. Le déphasage entre l'arbre menant et l'arbre mené augmente jusqu'à ce que la palette 17 vienne en butée sur la cloison 12. Dans cette position, l'angle d'ouverture de la soupape d'échappement, mesuré par rapport à la position du vilebrequin au PMH, est maximal (figure 11).

En fonctionnement à faible puissance, la pression de suralimentation diminue progressivement avec la puissance développée par le moteur, jusqu'à ce qu'elle atteigne la valeur du susdit seuil au-dessous de laquelle le fonctionnement stable du moteur n'est plus assuré. Dans cette situation, l'action du ressort 43 sur le tiroir distributeur 23 l'emporte sur celle de la pression de suralimentation, ce qui provoque le déplacement, vers la droite de la figure 10, dudit tiroir 23 jusqu'à une butée 36 et, par voie de conséquence, l'interruption de la communication cyclique de la chambre 14 vers la chambre 13, puis l'ouverture de la communication cyclique de la chambre 13 vers la chambre 14. La chambre 13 se videra progressivement dans la chambre 14, ce qui entraînera la réduction du déphasage entre le vilebrequin (arbre menant) et l'arbre à cames (arbre mené). Ainsi, l'ouverture de la soupape d'échappement interviendra plus tôt dans la course de détente du piston moteur, ce qui augmentera l'énergie des gaz d'échappement et accélérera la turbine de suralimentation en provoquant, par contre-réaction, l'élévation de la pression d'air de suralimentation. Ce processus se poursuivra jusqu'à ce que la pression de suralimentation retrouve la valeur du seuil assurant le fonctionnement stable du moteur.

Dans tous les modes de réalisation de l'invention qui ont été représentés aux figures 3 à 5, 7, 9 et 10 et décrits ci-dessus, il a été supposé que les circuits de communication unidirectionnelle 18-21 et les moyens distributeurs 22 étaient situés en dehors du cylindre et du piston de l'accouplement, en particulier en dehors des cylindre et piston rotatifs 10 et 11. En fait, il est plus avantageux de monter ces circuits et moyens à l'intérieur du cylindre 10.

Une telle construction est représentée aux figures 12 et 13, la figure 12 étant une vue analogue à celle des figures 3, 9 et 10. La figure 13 montre les éléments de la figure 12 en coupe axiale, à l'exception d'un tiroir distributeur 46 qui est représenté en majeure partie en vue extérieure. Dans ce cas, le cylindre rotatif 10 est rendu solidaire en rotation de l'arbre menant par l'intermédiaire d'un pignon 26 et le piston 11 à palette 17 est solidaire de l'arbre mené 1. Les circuits de communication 18 et 19 sont ménagés dans le piston rotatif 11, les clapets anti-retour 20 et 21 pouvant être portés par la palette 17. L'arbre 16 du piston 11 est creux et porte intérieurement le tiroir distributeur rotatif et coulissant 46 qui se substitue au tiroir coulissant 23 des modes de réalisation précédents et qui tourne en synchronisme avec l'arbre menant, c'est-à-dire avec le cylindre rotatif 10, grâce par exemple à la présence d'un soufflet 49 qui, tout en lui permettant de coulisser axialement, solidarise le tiroir 46 en rotation avec le cylindre 10. Le tiroir 46 possède extérieurement deux évidements 50 et 51 séparés par une nervure 52 dont la forme sera décrite ci-après et les circuits de communication unidirectionnelle 18 et 19 possèdent (comme dans les schémas des figures 3 à 5, 7 et 10) un tronçon commun qui débouche par un orifice 53 en face de l'un ou l'autre des évidements 50 et 51 ou, comme représenté en trait interrompu à la figure 13, en face de la nervure 52 qui l'obture alors. L'évidement 50 communique avec la chambre 13 par l'orifice 41 et l'évidement 51 avec la chambre 14 par l'orifice 42, les orifices 41 et 42 traversant la paroi de l'arbre creux 16.

Lorsque le couple transmis par l'arbre 16 devient résistant, la cloison 12 comprime le liquide dans la chambre 13 et décomprime le liquide dans la chambre 14. Le tiroir distributeur 46 tourne à la même vitesse que le cylindre menant 10. Si, du fait de la compressibilité du fluide hydraulique et des fuites entre les chambres 13 et 14, le déphasage $\Delta\varphi$ entre les arbres menant et mené diminue, la nervure 52 du distributeur 46 découvre l'orifice 53 faisant communiquer la chambre 54, située entre les clapets anti-retour 20 et 21, avec la chambre 13 grâce à l'orifice 41. La surpression dans la chambre 13 ferme les clapets anti-retour 20 et 21. Lorsque le couple transmis par l'arbre mené 1 devient moteur du fait par exemple de l'action des moyens de rappel élastique 7 (figure 1), la palette 17 comprime la chambre 14 et décomprime la chambre 13. L'orifice 53 étant découvert à la suite du glissement de la phase lors de l'alternance précédente, la surpression dans la chambre 14 soulève le clapet anti-retour 21, ce qui met la chambre 14 en communication avec la chambre 13. Ce transfert de liquide de la chambre 14 vers la chambre 13 augmente le déphasage entre les arbres menant et mené et vient donc corriger la diminution du déphasage survenue lors de l'alternance précédente. Si cette correction est trop forte, elle sera atténuée lors de l'alternance suivante et ainsi de suite.

Avec ce dispositif, on voit que l'orifice 53 vient se caler automatiquement en face de la nervure 52, quelles que soient les fuites entre les deux chambres 13 et 14, pourvu que celles-ci restent modérées.

La forme de la nervure 52 permet de déterminer la loi de variation de la phase en fonction d'un paramètre extérieur. Par exemple, sur la figure 13, où elle a une forme hélicoïdale, le déphasage entre les deux arbres dépendra de la position du distributeur 46 que l'on pourra faire varier par exemple en modifiant la pression à l'intérieur du soufflet 49. En effet, selon cette position axiale, la position angulaire de l'orifice 53 se modifiera automatiquement pour qu'il soit obturé par la nervure 52.

Les figures 14 à 16 illustrent l'application d'un accouplement analogue à celui des figures 12 et 13 à la régulation, dont le principe a été exposé en référence à la figure 10, d'un moteur à combustion interne suralimenté par au moins un turbocompresseur. A cet effet, il suffit de faire agir dans le soufflet 49 la susdite pression de suralimentation $P_2$. De plus, il y a intérêt à donner à la nervure 52 non pas une forme hélicoïdale, comme représenté à la figure 13, mais une forme en gradins, avec deux parties extrêmes 52a et 52c sensiblement parallèles à l'axe de translation du tiroir 46 et une partie centrale 52b disposée dans un plan perpendiculaire audit axe.

Le fonctionnement est alors le suivant. Dans une première phase illustrée à la figure 14, l'orifice 53 se place en face de la partie 52a de la nervure 52. Le déphasage se cale sur sa valeur maximale, quelle que soit la pression de suralimentation, tant que celle-ci est inférieure à un certain seuil (calage en position).

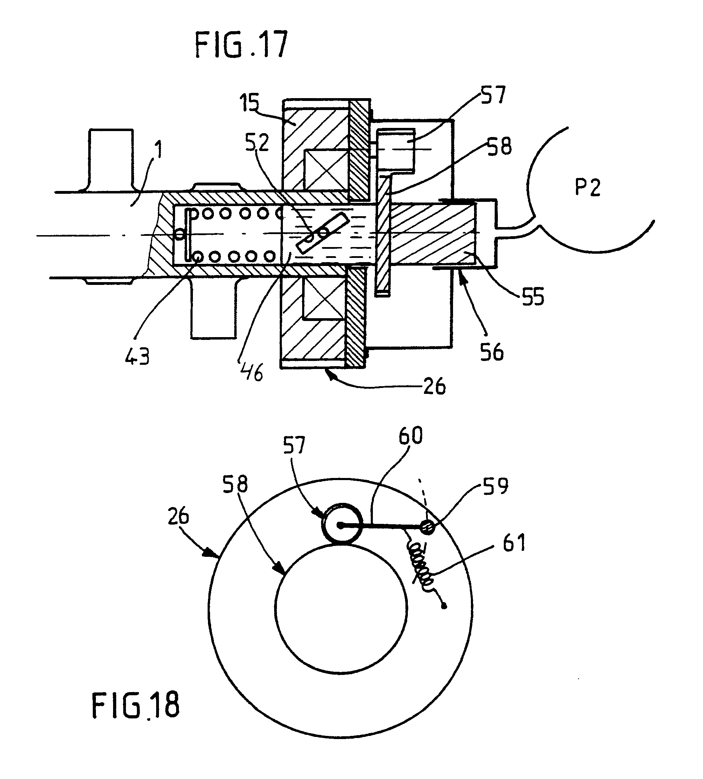

Dans une deuxième phase illustrée à la figure 15, l'orifice 53 se place en face de la partie 52b de la nervure 52. Si la pression de suralimentation augmente, le déphasage diminue et inversement (asservissement en pression). Le déphasage entre l'arbre menant (vilebrequin du moteur) et l'arbre mené (arbre à cames) s'ajuste automatiquement de façon que la pression de suralimentation prenne la valeur correspondant à l'obturation de l'orifice 53. Comme la partie 52b est sensiblement perpendiculaire au déplacement du tiroir 46, la pression de suralimentation sera maintenue constante.

Dans une troisième phase illustrée à la figure 16, la pression de suralimentation dépasse le seuil déterminé à l'avance, du fait de la charge du moteur. Le déphasage atteint la valeur minimale et reste calé sur cette valeur minimale quelle que soit la valeur de la pression de suralimentation (sous réserve qu'elle reste supérieure audit seuil), du fait que la partie 52c de la nervure 52 est sensiblement parallèle au déplacement du tiroir 46. De cette façon, on évite un contact physique entre la palette 17 et la nervure 12 (butée fluide), ce qui préserve mécaniquement les pièces et limite le bruit.

Dans ce qui précède, on a décrit, en référence aux figures 10, 12 et 13, des accouplements dont la position du tiroir distributeur 23 est asservie, en tant que paramètre de fonctionnement du moteur, à la pression d'air de suralimentation $P_2$. Comme il ressort de ce qui précède, cette position pourrait être également asservie à la vitesse du moteur et éventuellement en plus à cette pression de suralimentation, ainsi qu'il sera exposé en regard des figures 17 et 18.

Le tiroir 46 a une position axiale déterminée par un piston 55 lié à celui-ci et coulissant dans un cylindre 56 lié au pignon menant 26 et coopérant, sous l'effet de la pression de suralimentation $P_2$, avec un ressort 43. La position angulaire du tiroir 46 est déterminée par un pignon 57 lié au pignon menant 26 et qui engrène avec un pignon 58 lié au tiroir 46. Le pignon de liaison 57 lié au pignon menant 26 peut varier de position angulaire par rapport à ce dernier grâce à une masselotte excentrée 59 coopérant avec l'axe du pignon de liaison 57 par l'intermédiaire d'un bras de levier 60 retenu par un ressort 61.

Ainsi à chaque valeur de la vitesse de l'arbre menant (donc du moteur) correspondra une valeur de la position angulaire du tiroir 46, tandis qu'à chaque valeur de la pression de suralimentation correspondra une position axiale du tiroir 46. On réalise ainsi le double asservissement de la phase entre le pignon menant et le pignon mené (l'arbre à cames), avec la vitesse de rotation N du moteur et la pression de suralimentation $P_2$.

## Revendications

1. Accouplement, à phase variable en fonctionnement, pour la transmission d'un couple alterné entre une partie menante, destinée à être reliée à un arbre menant, et une partie menée, destinée à être reliée à un arbre qui est normalement mené, lesquelles parties, en fonctionnement, sont soumises à des couples alternés résistants et moteurs, plus particulièrement accouplement destiné à être disposé entre l'arbre principal d'un moteur à combustion interne, à soupapes et/ou à injecteurs actionnés par au moins un arbre à cames, et cet arbre à cames (1) en vue de faire varier en marche le calage angulaire de l'arbre à cames (1) par rapport à l'arbre principal du moteur, l'une des parties menante et menée de l'accouplement étant reliée à un cylindre (10 ; 31) et l'autre à un piston (11 ; 30) qui délimitent entre eux au moins deux chambres antagonistes (13, 14 ; 32, 33), de telle manière qu'à une valeur angulaire du déphasage entre les deux arbres corresponde une position relative et une seule entre piston (11 ; 30) et cylindre (10 ; 31) ; les deux chambres (13, 14 ; 32, 33) ayant un volume total sensiblement constant, et étant remplies d'un liquide hydraulique pratiquement incompressible aux pressions normales de fonctionnement, caractérisé en ce que ces chambres (13, 14 ; 32, 33) sont reliées entre elles par deux circuits de communication unidirectionnelle (18, 19), de sens opposés et chacun de volume sensiblement constant ; et en ce qu'il comprend des moyens distributeurs (22) agencés de manière soit à activer l'un ou l'autre de ces circuits de communication, en neutralisant l'autre, soit à les neutraliser tous les deux, selon que le déphasage entre les parties menante et menée de l'accouplement doit être soit augmenté ou diminué, soit maintenu constant.

2. Accouplement selon la revendication 1, caractérisé en ce que le cylindre (10) et le piston (11) sont animés de mouvements relatifs de rotation.

3. Accouplement selon la revendication 2, caractérisé en ce que le cylindre (10) est constitué par une enveloppe cylindrique, qui est limitée axialement par deux parois transversales (15) et qui porte au moins un cloison radiale (12), et le piston (11) par un arbre (16) qui traverse de façon étanche ces parois transversales (15) et qui porte au moins une palette radiale (17).

4. Accouplement selon l'une des revendications 2 et 3, caractérisé en ce qu'il comprend deux cloisons radiales (12a, 12b) et deux palettes radiales (17a, 17b) délimitant deux paires de chambres opposées (13a, 13b, 14a, 14b) qui alternent en direction circonférentielle et qui sont réunies deux à deux en permanence.

5. Accouplement selon la revendication 1, caractérisé en ce que le cylindre (31) et le piston (30) sont animés de mouvements relatifs de translation et en ce que des moyens mécaniques (27, 28) sont prévus pour transformer ces mouvements en mouvements relatifs de rotation.

6. Accouplement selon la revendication 5, caractérisé en ce que le piston (30) possède une tige (29) qui traverse le cylindre (31) de part et d'autre du piston (30), par des portées cylindriques de sections égales.

7. Accouplement selon l'une quelconque des revendications 1 à 6, caractérisé en ce que les chambres (13, 14 ; 13a, 14a, 13b, 14b ; 32, 33) sont reliées, respectivement par des clapets anti-retour (39, 40), à une réserve de liquide hydraulique ou pompe de gavage (38).

8. Accouplement selon l'une quelconque des revendications 2 à 4, caractérisé en ce que les circuits de communication unidirectionnelle (18, 19) et les moyens distributeurs (22) sont montés à l'intérieur du cylindre (10).

9. Accouplement selon l'ensemble des revendications 3 et 8, caractérisé en ce que les circuits de communication unidirectionnelle comprennent des clapets anti-retour (20, 21) disposés à l'intérieur de la palette radiale (17).

10. Accouplement selon l'une quelconque des revendications 1 à 9, destiné à être interposé entre l'arbre principal d'un moteur à combustion interne, à soupapes et/ou à injecteurs actionnés par au moins un arbre à cames (1), et cet arbre à cames (1), caractérisé en ce que les moyens distributeurs (22) sont sensibles à au moins un paramètre de fonctionnement du moteur.

11. Accouplement selon la revendication 10 pour moteur à combustion interne suralimenté par au moins un turbocompresseur, caractérisé en ce que le paramètre de fonctionnement du moteur est la pression de suralimentation ($P_2$) et/ou la vitesse du moteur.

12. Accouplement selon la revendication 11, caractérisé en ce que les moyens distributeurs (22) comprennent un organe mobile (23, 46) sur lequel agissent en sens inverse la pression de suralimentation ($P_2$) et des moyens de rappel élastiques (43).

13. Accouplement selon la revendication 12, caractérisé en ce qu'un asservissement en boucle fermée est disposé entre l'organe mobile (46) des moyens distributeurs (22) et l'arbre mené (1).

14. Accouplement selon l'ensemble des revendications 9 et 13, caractérisé en ce que l'arbre (16) du piston rotatif (11) est creux, en ce qu'une partie commune des circuits de communication unidirectionnelle (18, 19) logée dans la palette (17) débouche à l'intérieur de l'arbre creux (16) par un orifice commun (53), en ce que l'organe mobile (46) des moyens distributeurs (22) est monté de façon à pouvoir tourner à l'intérieur de l'arbre creux (16) et possède extérieurement deux évidements (50, 51) séparés par une nervure (52) et en ce que l'arbre creux (16) possède, de part et d'autre de l'orifice (53), deux orifices (41, 42) faisant communiquer respectivement avec les chambres opposées (13, 14) les espaces limités à l'intérieur de l'arbre creux (46) par les évidements (50, 51) et la nervure (52).

15. Accouplement selon la revendication 14, caractérisé en ce que la nervure (52) a une forme hélicoïdale.

16. Accouplement selon la revendication 14, caractérisé en ce que la nervure (52) a une forme en gradin (52a, 52b, 52c).

17. Moteur à combustion interne, caractérisé en ce qu'il possède, entre son arbre principal et un arbre mené (1) un accouplement selon l'une quelconque des revendications 1 à 16.

**Patentansprüche**

1. Kupplung mit veränderlicher Phase bei Betrieb, zur Übertragung eines alternierenden Kräftepaares zwischen einem treibenden Teil, das dazu bestimmt ist, mit einer Antriebswelle verbunden zu werden, und mit einem getriebenen Teil, das dazu bestimmt ist, mit einer normalerweise abtreibenden Welle (Abtriebswelle) verbunden zu werden, wobei die genannten Teile bei Betrieb alternierenden Kräftepaaren, nämlich Lastmomenten (oder Gegenmomenten) und Motordrehmomenten unterworfen werden, insbesondere Kupplung, die dazu bestimmt ist, zwischen der Hauptantriebswelle einer Brennkraftmaschine mit durch wenigstens eine Nockenwelle betätigten Ventilen und/ oder Einspritzdüsen und dieser Nockenwelle (1) angeordnet zu werden, mit dem Zweck, die Winkeleinstellung der Nockenwelle (1) in bezug auf die Hauptantriebswelle der Maschine im Betrieb variieren zu lassen, wobei das eine der treibenden und getriebenen Teile der Kupplung mit einem Zylinder (10 ; 31) und das andere dieser Teile mit einem Kolben (11 ; 30) verbunden sind, wobei Zylinder und Kolben zwischen sich wenigstens zwei gegenwirkende Kammern (13, 14 ; 32, 33) in der Weise begrenzen, daß einem Winkelwert der Phasendifferenz oder -verschiebung zwischen den beiden Wellen eine einzige relative Position zwischen Kolben (11 ; 30) und Zylinder (10 ; 31) entspricht, und wobei die zwei Kammern (13, 14 ; 32, 33) ein im wesentlichen konstantes Gesamtvolumen aufweisen und mit einer Hydraulikflüssigkeit gefüllt sind, die bei den normalen Betriebsdrücken praktisch inkompressibel ist, dadurch gekennzeichnet, daß diese Kammern (13, 14 ; 32, 33) untereinander durch zwei je in einer Richtung wirkende Verbindungskreise (18, 19) in Verbindung stehen, die entgegengesetzt gerichtet sind und von denen jeder ein im wesentlichen konstantes Volumen aufweist, und daß die Kupplung eine Verteilereinrichtung (22) aufweist, die in der Weise angeordnet ist, daß sie entweder den einen oder den anderen dieser Verbindungskreise aktiviert, während der jeweils andere neutralisiert wird, oder alle zwei Verbindungskreise neutralisiert, je nach dem, ob die Phasendifferenz oder -verschiebung zwischen den treibenden und getriebenen Teilen der Kupplung entweder vergrößert oder vermindert oder ob diese Phasendifferenz oder -verschiebung konstant gehalten werden muß.

2. Kupplung nach Anspruch 1, dadurch gekennzeichnet, daß der Zylinder (10) und der Kolben (11) zu relativen Rotationsbewegungen angeregt werden.

3. Kupplung nach Anspruch 2, dadurch gekennzeichnet, daß der Zylinder (10) durch ein zylindrisches Gehäuse gebildet ist, welches durch zwei Querwände (15) axial begrenzt ist und wenigstens eine radiale Zwischenwand (12) aufweist, und daß der Kolben (11) durch eine Welle (16) gebildet ist, welche durch diese Querwände (15) in einer abgedichteten Weise quer hindurch verläuft und wenigstens eine radiale Palette (17) aufweist.

4. Kupplung nach einem der Ansprüche 2 und 3, dadurch gekennzeichnet, daß sie zwei radiale Zwischenwände (12a, 12b) und zwei radiale Paletten (17a, 17b) aufweist, welche zwei Paare von entgegengesetzten Kammern (13a, 13b, 14a, 14b) begrenzen, die sich in der Umfangsrichtung abwechseln und die paarweise in Permanenz miteinander verbunden sind.

5. Kupplung nach Anspruch 1, dadurch gekennzeichnet, daß der Zylinder (31) und der Kolben (30) zu relativen Translationsbewegungen angeregt sind und daß mechanische Mittel (27, 28) vorgesehen sind, um diese Bewegungen in relative Rotationsbewegungen zu transformieren.

6. Kupplung nach Anspruch 5, dadurch gekennzeichnet, daß der Kolben (30) eine Stange (29) aufweist, welche den Zylinder (31) beiderseits des Kolbens (30) durch zylindrische Bereiche von gleichen Querschnitten hindurch durchsetzt.

7. Kupplung nach einem der Ansprüche 1-6, dadurch gekennzeichnet, daß die Kammern (13, 14 ; 13a, 14a, 13b, 14b ; 32, 33) jeweils durch Rückschlagventile (39, 40) mit einer Hydraulikflüssigkeits-Reserve oder mit einer Zusatzpumpe (38) verbunden sind.

8. Kupplung nach einem der Ansprüche 2-4, dadurch gekennzeichnet, daß die jeweils in einer Richtung wirkenden Verbindungskreise (18, 19) und die Verteilereinrichtung (22) im Inneren des Zylinders (10) angeordnet sind.

9. Kupplung nach der Gesamtheit der Ansprüche 3 und 8, dadurch gekennzeichnet, daß die jeweils in einer Richtung wirkenden Verbindungskreise Rückschlagventile (20, 21) aufweisen, die im Inneren der radialen Palette (17) angeordnet sind.

10. Kupplung nach einem der Ansprüche 1-9, welche dazu bestimmt ist, zwischen der Hauptantriebswelle einer Brennkraftmaschine mit durch wenigstens eine Nockenwelle (1) betätigten Ventilen und/oder Einspritzdüsen und dieser Nockenwelle (1) angeordnet zu werden, dadurch gekennzeichnet, daß die Verteilereinrichtung (22) auf wenigstens einen Betriebsparameter der Maschine empfindlich ist.

11. Kupplung nach Anspruch 10, für eine Brennkraftmaschine, die durch wenigstens einen Turboverdichter aufgeladen wird, dadurch gekennzeichnet, daß der Betriebsparameter der Maschine der Druck der Aufladung ($P_2$) und/oder die Geschwindigkeit bzw. die Drehzahl der Maschine ist.

12. Kupplung nach Anspruch 11, dadurch gekennzeichnet, daß die Verteilereinrichtung (22) ein bewegliches Element (23, 46) aufweist, auf welches der Druck der Aufladung ($P_2$) und elastische Rückstellmittel (43) in umgekehrten Richtungen einwirken.

13. Kupplung nach Anspruch 12, dadurch gekennzeichnet, daß ein Regelungssystem mit geschlossenem Regelkreis zwischen das bewegliche Element (46) der Verteilereinrichtung (22) und die Abtriebswelle (1) geschaltet ist.

14. Kupplung nach der Gesamtheit der Ansprüche 9 und 13, dadurch gekennzeichnet, daß die Welle (16) des Rotationskolbens (11) hohl ausgebildet ist, daß ein gemeinsamer Teil der jeweils in einer Richtung wirkenden Verbindungskreise (18, 19), welcher in der Palette (17) untergebracht ist, über eine gemeinsame Mündung (53) in das Innere der hohlen Welle (16).einmündet, daß das bewegliche Element (46) der Verteilereinrichtung (22) in der Weise angeordnet ist, daß es sich im Inneren der hohlen Welle (16) drehen kann, und auf seiner Außenseite zwei Aussparungen oder Taschen (50, 51) besitzt, welche durch eine Rippe (52) voneinander getrennt sind, und daß die hohle Welle (16) zu beiden Seiten der Mündung (53) zwei Mündungen (41, 42) aufweist, welche eine Kommunikation der im Inneren der hohlen Welle (46) begrenzten Räume über die Aussparungen oder Taschen (50, 51) und die Rippe (52) jeweils mit den entgegengesetzten Kammern (13, 14) erlauben.

15. Kupplung nach Anspruch 14, dadurch gekennzeichnet, daß die Rippe (52) eine spiral- oder schraubenförmige Form aufweist.

16. Kupplung nach Anspruch 14, dadurch gekennzeichnet, daß die Rippe (52) eine Stufenform (52a, 52b, 52c) aufweist.

17. Brennkraftmaschine, dadurch gekennzeichnet, daß sie zwischen ihrer Hauptantriebswelle und einer Abtriebswelle (1) eine Kupplung gemäß einem der Ansprüche 1-16 aufweist.

## Claims

1. Coupling, having a variable phase in operation, for the transmission of an alternating torque between a driving part, intended to be connected to a driving shaft, and a driven part, intended to be connected to a shaft which is normally driven, which parts, in operation, are subjected to alternating resistant and driving torques, more particularly a coupling intended to be disposed between the main shaft of an internal combustion engine having valves and/or injectors actuated by at least one camshaft, and this camshaft (1) for the purpose of varying in operation the angular setting of the camshaft (1) relative to the main, shaft of the engine, one of the driving and driven parts of the coupling being connected to a cylinder (10 ; 31) and the other being connected to a piston (11 ; 30) which delimit therebetween at least two antagonistic chambers (13, 14 ; 32, 33) in such manner that a relative and single position between the piston (11 ; 30) and the cylinder (10 ; 31) corresponds to an angular phase difference value between the two shafts ; the two chambers (13, 14 ; 32, 33) having a substantially constant total volume and being filled with a hydraulic liquid which is practically incompressible at normal pressures of operation, characterized in that these chambers (13, 14 ; 32, 33) are interconnected through two unidirectional communication circuits (18, 19) which have opposite directions and each a substantially constant volume ; it comprises distributing means (22) adapted in such manner as to either bring into action one or the other of these communication circuits while neutralizing the other, or to neutralize both of them, depending on whether the phase difference between the driving and driven parts of the coupling must be either increased or decreased, or maintained constant.

2. Coupling according to claim 1, characterized in that the cylinder (10) and the piston (11) undergo relative movements of rotation.

3. Coupling according to claim 2, characterized in that the cylinder (10) is constituted by a cylindrical case which is axially limited by two transverse walls (15) and which carries at least one radial partition (12), and the piston (11) by a shaft (16) which extends through these transverse walls (15) in a sealed manner and carries at least one radial vane (17).

4. Coupling according to one of the claims 2 and 3, characterized in that it comprises two radial partitions (12a, 12b) and two radial vanes (17a, 17b) delimiting two pairs of opposed chambers (13a, 13b, 14a, 14b) which alternate in the circumferential direction and are permanently interconnected in pairs.

5. Coupling according to claim 1, characterized in that the cylinder (31) and the piston (30) undergo relative movements in translation and mechanical means (27, 28) are provided for converting these movements into relative movements of rotation.

6. Coupling according to claim 5, characterized in that the piston (30) has a rod (29) which extends through the cylinder (31) on each side of the piston (30) by cylindrical bearing surfaces of equal sections.

7. Coupling according to any one of the claims 1 to 6, characterized in that the chambers (13, 14 ; 13a, 14a, 13b, 14b ; 32, 33) are connected, respectively through check valves (39, 40), to a reserve supply of hydraulic liquid or a forced feed pump (38).

8. Coupling according to any one of the claims 2 to 4, characterized in that the unidirectional communication circuits (18, 19) and the distributing means (22) are mounted within the cylinder (10).

9. Coupling according to claims 3 and 8, characterized in that the unidirectional communication circuits comprise check valves (20, 21) disposed within the radial vane (17).

10. Coupling according to any one of the claims 1 to 9, intended to be interposed between the main shaft of an internal combustion engine having valves and/or injectors actuated by at least one camshaft (1) and this camshaft (1), characterized in that the distributing means (22) are responsive to at least one parameter of operation of the engine.

11. Coupling according to claim 10 for an internal combustion engine supercharged by at least one turbocompressor, characterized in that the parameter of operation of the engine is the supercharging pressure ($P_2$) and/or the sheed of the engine.

12. Coupling according to claim 11, characterized in that the distributing means (22) comprise a movable element (23, 46) on which act in opposite directions the supercharging pressure ($P_2$) and elastic return means (43).

13. Coupling according to claim 12, characterized in that a closed loop control is disposed between the movable element (46) of the distributing means (22) and the driven shaft (1).

14. Coupling according to claims 9 and 13 together, characterized in that the shaft (16) of the rotatable piston (11) is hollow, a common part of the unidirectional communication circuits (18, 19) disposed in the vane (17) opens out inside the hollow shaft (16) through a common orifice (53), the movable element (46) of the distributing means (22) is mounted in such manner as to be rotatable inside the hollow shaft (16) and includes externally two recesses (50, 51) separated by a rib (52), and the hollow shaft (16) includes, on each side of the orifice (53), two orifices (41, 42) putting respectively in communication with the opposed chambers (13, 14) the spaces limited inside the hollow shaft (46) by the recesses (50, 51) and the rib (52).

15. Coupling according to claim 14, characterized in that the rib (52) has a helical shape.

16. Coupling according to claim 14, characterized in that the rib (52) has a stepped shape (52a, 52b, 52c).

17. Internal combustion engine, characterized in that it comprises, between its main shaft and a driven shaft (1) a coupling according to any one of the claims 1 to 16.

*Fig.1*

*Fig.2*

Fig. 3

Fig. 4

Fig. 5

Fig. 7

EP 0 388 244 B1

*Fig: 6*

*Fig: 8*

*Fig: 9*

*Fig: 11*

*Fig: 10*

14

*Fig. 12*

*Fig. 13*

*Fig. 14*

*Fig. 15*

*Fig. 16*

FIG.17

FIG.18